Europäisches Patentamt

European Patent Office

Office européen des brevets

(11) Numéro de publication: **0 120 743**
**A1**

(12) # DEMANDE DE BREVET EUROPEEN

(21) Numéro de dépôt: 84400373.1

(22) Date de dépôt: 24.02.84

(51) Int. Cl.³: **F 02 B 43/08**

(30) Priorité: 25.02.83 FR 8303079

(43) Date de publication de la demande:
03.10.84 Bulletin 84/40

(84) Etats contractants désignés:
AT BE CH DE FR GB IT LI LU NL SE

(71) Demandeur: RENAULT VEHICULES INDUSTRIELS
Société Anonyme dite:
129 rue Servient "La Part Dieu"
F-69003 Lyon(FR)

(72) Inventeur: Bonnetain, Yves
25, rue Laurent Carle
F-69008 Lyon(FR)

(74) Mandataire: Réal, Jacques et al,
Régie Nationale des Usines Renault 8-10, avenue Emile
Zola
F-92109 Boulogne-Billancourt(FR)

(54) Installation de gazogène à circulation améliorée.

(57) Installation de gazogène du type comprenant notamment
un gazogène (G), une station de traitement (K) des gaz de
gazogéne pour l'épuration, la filtration et le refroidissement
de ceux-ci, une station de filtration (F) d'aire comburant (A),
un doseur-mélangeur (D) et un moteur thermique (M). Suivant l'invention, cette installation comporte une turbine ($T_2$)
entraînée par les gaz d'échappement de ce moteur thermique
(M) ainsi qu'un compresseur ($C_2$) entraîné par cette turbine
($T_2$) pour pulser de l'air (A) vers ce gazogène (G).

*Application*: notamment aux machines et installations
fonctionnant aux gaz de gazogène à rendement amélioré.

FIG.7

# INSTALLATION DE GAZOGENE A CIRCULATION AMELIOREE.

L'invention a trait à une installation de gazogène à circulation améliorée fournissant du carburant gazeux à un moteur thermique éventuellement suralimenté.

Les installations de gazogène, destinées à transformer en gaz combustible des minéraux, végétaux, résidus industriels, domestiques ou agricoles ..., suscitent de l'intérêt dans le cadre de la recherche d'énergies de remplacement ou de substitution, d'énergies renouvelables, d'énergies nouvelles, ou de valorisation de la biomasse ou des résidus.

L'acceptabilité de telles installations varie suivant les conditions économiques mais aussi de leurs caractéristiques propres et plus particulièrement la propreté du gaz produit dont dépend l'entretien et la longévité des machines ou installations qui utilisent ce gaz.

Ce gaz doit être débarrassé, entre autres choses, des particules solides en suspension (silice ...) et des goudrons formés lors de la gazéification. La difficulté d'éliminer ces derniers conduit souvent à traiter préalablement les produits que l'on veut gazéifier (séchage du bois, torréfaction préalable, utilisation exclusive de charbon de bois, élimination des végétaux tendres, etc.).

Cela conduit soit à ne pouvoir utiliser tous les produits disponibles, soit à les traiter, ce qui augmente leur coût et rend parfois la gazéification non attractive.

Pour résoudre ce problème, on dispose, à l'aval du gazogène et à l'amont de la machine brûlant le gaz produit, diverses installations de filtrage, sèches ou humides et souvent les deux, de condenseurs des eaux résiduelles, de refroidisseurs du gaz, etc . ainsi que de doseurs-mélangeurs.

Cette installation d'épuration présente donc une perte de charge naturelle élevée qui s'oppose à la circulation de l'air à l'entrée du gazogène et du gaz dans et après celui-ci. Souvent, pour ne pas trop perturber l'écoulement, on est conduit à limiter cette perte de charge, donc à limiter aussi l'efficacité globale de l'épuration.

Ce compromis est particulièrement sensible lorsque le gaz produit alimente un moteur thermique suralimenté par turbo-compresseur. Le compresseur centrifuge de celui-ci est en effet très sensible aux pertes de charge amont.

Compte-tenu de ce qui précède, trois dispositions distinctes peuvent être envisagées :

Dans une première disposition, l'air aspiré dans un gazogène qui produit un gaz épuré dans une station, est mélangé dans un doseur à l'air comburant filtré puis envoyé à un moteur thermique.

Dans sa version suralimentée, cette disposition prévoit en outre un turbo-compresseur dont la turbine est mue par des gaz d'échappement et entraîne un compresseur qui, placé après un doseur, comprime le mélange air/gaz avant de l'introduire dans un moteur, après qu'il ait été ou non refroidi dans un refroidisseur.

Dans cette disposition, la branche constituée par le gazogène et la station d'épuration crée une perte de charge très supérieure à celle de la branche plus directe de la station de filtration de l'air comburant. Le doseur doit créer une perte de charge supplémentaire sur le circuit de l'air comburant pour équilibrer les débits air et gaz qui doivent répondre à une loi donnée.

Cette perte de charge réduit considérablement le remplissage du moteur, donc, par suite, la puissance dont il est capable. En version suralimentée, le phénomène est amplifié par le fait que le rendement du turbo-compresseur est très fortement réduit.

Pour éviter cette perte importante de puissance, on doit limiter la perte de charge dans la station d'épuration donc accepter une épuration moins poussée ou requérant une maintenance accrue (nettoyages plus fréquents des filtres).

Dans une deuxième disposition, un compresseur aspire de l'air au travers d'un filtre. L'installation de gazogène est placée à l'aval d'un compresseur qui débite, grâce à un doseur, en partie de l'air directement dans un moteur, en autre partie de l'air dans l'ensemble gazogène et station d'épuration. Une pompe de reprise, une soufflante, ... peut être placée entre un doseur et le gazogène ou à l'aval d'une station d'épuration pour équilibrer les pertes de charges entre le doseur et le moteur, directement et indirectement en passant par le gazogène et la station d'épuration.

Un clapet limiteur de pression est placé entre le compresseur et le gazogène pour que cette pompe de reprise ... résiste mécaniquement aux pressions internes auxquelles elle est soumise.

Dans cette disposition, le clapet doit être taré à une valeur très faible de pression devant celle que le compresseur débite normalement. Ainsi, la pression du mélange à l'entrée du moteur se trouve t'elle fortement réduite, et, par suite, la puissance du moteur également.

Pour pallier les inconvénients des dispositions précédentes, la troisième disposition consiste à placer à l'amont d'un gazogène une soufflante pour l'air, mue notamment par un moteur électrique alimenté par le réseau s'il existe et si l'installation est fixe ou par la batterie d'accumulateurs de bord si l'installation est embarquée sur un véhicule automobile.

Dans ce dernier cas, les caractéristiques pression/débit/rendement de l'ensemble moteur/soufflante conduisent soit à des consommations d'électricité rédhibitoires (obtenue d'ailleurs avec un rendement global extrêmement faible) soit à l'obligation de réduire les caractéristiques pression/débit. Comme le débit est une donnée constructive, c'est sur la pression qu'il faut jouer et on est ramenée aux inconvénients cités précédemment.

La deuxième disposition est à proscrire car on exclut à priori un gazogène calculé pour résister aux pressions de suralimentation nécessaires pour ne pas affecter sensiblement la puissance du moteur.

La troisième disposition est une évolution logique de la première disposition dont elle élimine partiellement les défauts au niveau du compromis perte de puissance/efficacité de l'épuration du gaz. Son défaut, moins grave que le précédent mais cependant préoccupant, est soit de maintenir ce compromis mais exprimé ici de façon moins sévère, soit de trouver une source d'énergie importante et affectant le moins possible le rendement énergétique de l'ensemble. Cette source ne peut être électrique comme nous l'avons vu. Elle ne peut être non plus mécanique avec prélèvement sur l'arbre car compliquée et coûteuse en rendement global.

La présente invention a pour objet une disposition avantageusement adaptée à une installation de gazogène dérivée de cette troisième disposition et ne présentant pas les inconvénients précités.

Suivant une particularité de l'invention, cette installation de gazogène du type comprenant notamment un gazogène, une station de traitement des gaz de gazogène pour l'épuration, la filtration et le refroidissement de ceux-ci, une station de filtration d'air comburant, un doseur-mélangeur et un moteur thermique, comporte une turbine entraînée par les gaz d'échappement de ce moteur ainsi qu'un compresseur entraîné par cette turbine pour pulser de l'air vers ce gazogène.

Suivant une autre particularité de l'invention, les gaz d'échappement de ce moteur thermique entraînent une turbine d'un premier turbo-compresseur puis une turbine d'un second turbo-compresseur dont le compresseur pulse de l'air vers le gazogène précité, par l'intermédiaire d'une vanne formant doseur.

Une utilisation dc l'énergie résiduelle et perdue des gaz d'échappement pour entraîner un turbo-compresseur qui pulse de l'air à l'intérieur d'une installation de gazogène permet d'équilibrer la perte de charge de celle-ci avec celle du circuit d'air comburant et de réaliser un dosage convenable de l'air et du gaz combustible avant l'introduction du mélange dans un moteur thermique alimenté par gaz de gazogène.

Cette utilisation qui permet des pertes de charges relativement élevées d'une installation de gazogène, autorise l'emploi de filtres efficaces sur les gaz de gazogène sans imposer un entretien inacceptable et sans perte de puissance excessive.

L'installation conforme à l'invention nécessite une turbo-machine du commerce, de faible coût, de fiabilité assurée et d'installation aisée, sans perturber de façon sensible le fonctionnement amont du moteur et de son éventuel turbo-compresseur de suralimentation.

D'autres particularités et avantages de l'invention seront mieux compris à la lecture de la description qui suit de deux modes de réalisation préférés mais non limitatifs, description faite en se référant aux dessins annexés dans lesquels :

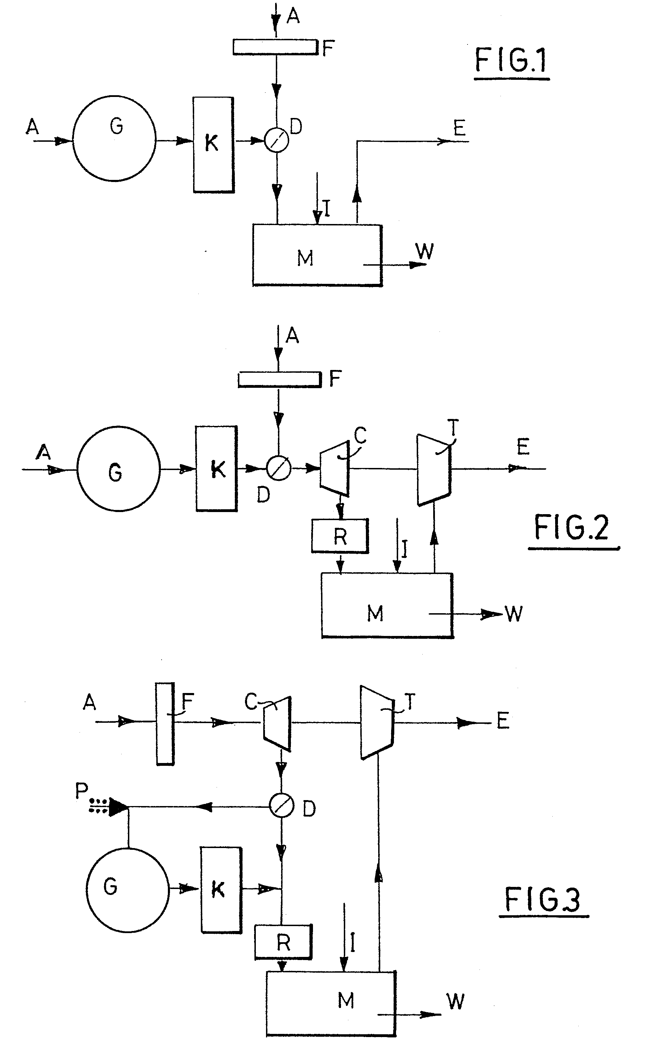

- les figures 1 et 2 illustrent la première disposition d'installation et représentent schématiquement et successivement une installation de gazogène comprenant un gazogène en dépression alimentant un moteur thermique à aspiration naturelle, et une installation de gazogène comprenant un gazogène en dépression alimentant un moteur thermique suralimenté par un turbo-compresseur ;

- la figure 3 représente schématiquement une installation de gazogène comprenant un gazogène en pression alimentant un moteur thermique suralimenté par un turbo-compresseur, relative à la deuxième disposition d'installation ;

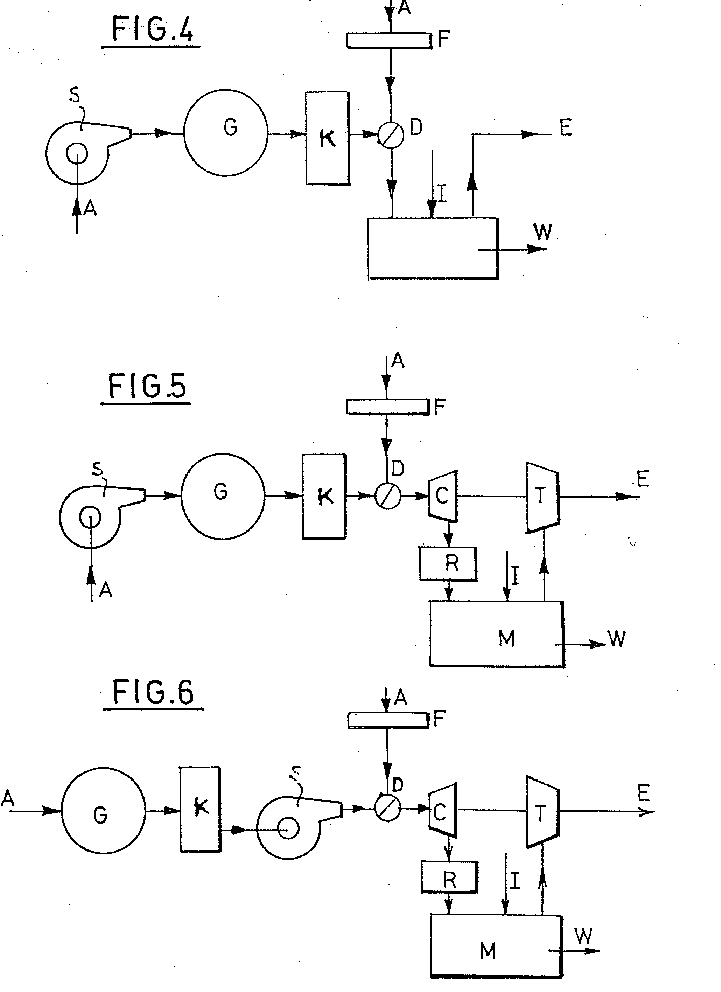

- les figures 4, 5 et 6 illustrent la troisième disposition d'installation et représentent schématiquement des installations de gazogène comprenant successivement un gazogène en pression alimentant un moteur thermique à aspiration naturelle, un gazogène en pression alimentant un moteur thermique suralimenté par un turbo-compresseur et un gazogène en dépression alimentant un moteur thermique suralimenté par un turbo-compresseur ;

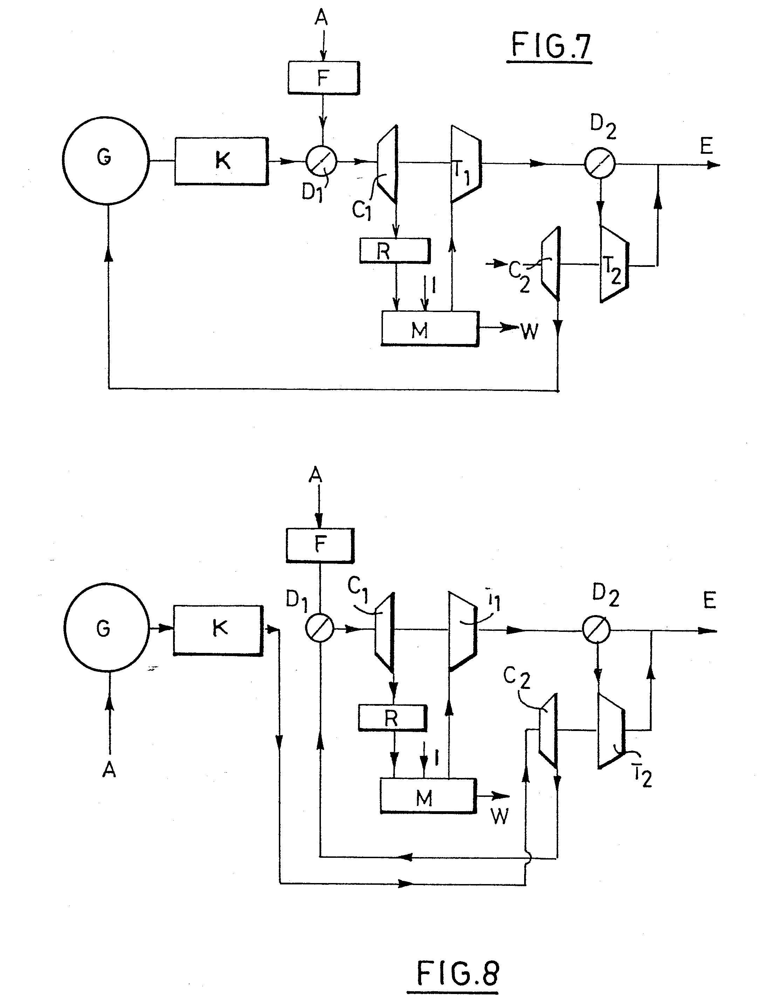

- les figures 7 et 8 illustrent la disposition d'installation conforme à l'invention et représentant schématiquement des installations de gazogène comprenant successivement un gazogène en pression et un gazogène en dépression, alimentant un moteur thermique suralimenté par un turbo-compresseur.

La première disposition envisageable pour une installation de gazogène est illustrée aux figures 1 et 2.

Comme commenté précédemment et représenté à la figure 1, de l'air A ou de l'oxygène dans certains cas est aspiré dans un gazogène G qui produit un gaz épuré dans une station de traitement K. Ce gaz épuré est ensuite mélangé dans un doseur D à l'air comburant A filtré en F avant d'alimenter un moteur thermique M.

Ce moteur M reçoit ou non un carburant supplémentaire I et produit, outre de la chaleur, de l'énergie mécanique W et des gaz d'échappement E.

A la figure 2, cette disposition prévoit un turbo-compresseur dont la turbine T est mue par des gaz d'échappement d'un moteur thermique M. Cette turbine T entraîne un compresseur C placé après un doseur D pour comprimer le mélange air/gaz avant d'alimenter ce moteur en ce mélange, après que celui-ci ait été ou non refroidi dans un refroidisseur M. La deuxième disposition envisageable pour une installation de gazogène est illustrée à la figure 3.

De l'air A est aspiré par un compresseur C au travers d'un filtre F comme en l'absence de l'installation gazogène. Ce compresseur fournit par l'intermédiaire d'un doseur D, de l'air refroidi ou non en R directement à un moteur thermique M d'une part, et de l'air à un gazogène G et à une station de traitement K d'autre part.

Une pompe de reprise, un ventilateur, une soufflante, etc. peut être disposée entre le doseur D et le gazogène G ou à l'aval de la station K pour équilibrer les pertes de charges entre le doseur D et le refroidisseur R directement, et ces derniers en passant par le gazogène G et la station K. Pour que celle-ci résiste mécaniquement aux pressions internes auxquelles elle est soumise, un clapet limiteur de pression P est placé entre le compresseur C et le gazogène G. La troisième disposition envisageable pour une installation de gazogène est illustrée aux figures 4, 5 et 6.

Les figures 4 et 5 se rapportent à des versions avec des moteurs thermiques M respectivement à aspiration naturelle et suralimenté par un turbo-compresseur. Dans ces deux cas, une soufflante S pour l'air A est disposée à l'amont d'un gazogène G. Celle-ci est mue notamment par un moteur électrique alimenté par le réseau ou par une batterie d'accumulateurs.

La figure 6 représente une variante de la figure 5 avec une soufflante S disposée entre une station de traitement K et un doseur D.

Une disposition d'installation conforme à l'invention est illustrée aux figures 7 et 8 qui correspondent à des versions à moteur suralimenté avec des gazogènes respectivement en pression et en dépression.

La version correspondant à la figure 7 est généralement préférée. On limitera la description d'une installation de gazogène conforme à l'invention et son fonctionnement à cette version.

Les gaz produits par un gazogène G sont traités (épuration, filtration, refroidissement) dans une station K puis délivrés à un doseur $D_1$, qui les mélange avec de l'air A filtré en F. Le mélange gaz/air est aspiré et refoulé sous pression par un compresseur $C_1$ d'un premier turbo-compresseur.

Ce mélange, refroidi ou non dans un refroidisseur R est introduit dans un moteur M où il brûle, en présence ou non d'un carburant supplémentaire I pour produire, entre autres, de l'énergie mécanique W et des gaz d'échappement qui entraînent la turbine $T_1$ du premier turbo-compresseur à laquelle est lié le compresseur $C_1$.

Les gaz d'échappement, à l'aval de $T_1$ possèdent encore un niveau d'énergie appréciable. Grâce à une vanne formant doseur $D_2$, ils peuvent être directement évacués vers un système d'échappement E puis l'atmosphère, soit dérivés, partiellement ou totalement vers une turbine $T_2$ d'un deuxième turbo-compresseur qui entraîne un compresseur $C_2$.

Celui-ci aspire de l'air A soit à l'atmosphère, soit à l'aval du filtre F déjà cité, soit au travers d'un second filtre $F_2$ et pulse cet air vers le gazogène G.

Les inconvénients cités inhérents aux trois dispositions précédentes suggèrent une récupération d'énergie sur les pertes multiples dont l'installation de gazogène est l'objet. A l'analyse, il s'avère que c'est sur les gaz d'échappement E, tout à l'aval de l'installation, que cette récupération s'avère la plus aisée.

On utilisera pour cela un turbo-compresseur sur échappement pour la version moteur à aspiration naturelle et un second turbo-compresseur sur échappement, à l'aval de celui qui équipe la version à moteur suralimenté.

Dans une disposition conforme à l'invention sur une version à moteur suralimenté illustrée à la figure 7, le filtre F placé sur le circuit de l'air A comburant présente une perte de charge $\triangle p_o$ à l'état neuf, fonction du débit volumique qui le traverse. Au fur et à mesure de son colmatage en poussières, $\triangle p_o$ tend vers une valeur $\triangle p_1$, perte de charge limite à partir de laquelle le filtre doit être nettoyé ou changé. Une indication automatique de colmatage peut être disposée entre F et $D_1$.

Pour que les débits d'air comburant et de gaz de gazogène puissent être dosés convenablement par $D_1$, il faut que les pressions à l'aval de F et à l'aval de K évoluent de la même façon.

Pour cela, la pression délivrée par $C_2$ et contrôlée par $D_2$, déduction faite des pertes de charges entre $C_2$ et $D_1$, devra rester sensiblement égale à la pression atmosphérique, déduction faite de la perte de charge de F.

Comme la perte de charge de G et de K varie aussi, le contrôle du système sera possible grâce à une mesure différentielle des pressions dans les deux circuits à l'amont immédiat de $D_1$. La valeur mesurée :

$$\triangle p = p \text{ circuit air} - p \text{ circuit gaz}$$

indiquera s'il faut ouvrir plus $D_2$ vers $T_2$ ($\triangle p > 0$) ou au contraire le fermer ($\triangle p < 0$). $D_2$ peut être manoeuvré mécaniquement, électriquement ou au moyen d'un vérin hydraulique, la commande étant asservie à la mesure de $\triangle p$.

La loi régissant cette commande peut être modifiée si besoin est :

- lors du démarrage de l'installation
- lors de son arrêt
- pour toute autre circonstance exceptionnelle.

L'invention ne se limite nullement aux modes d'application et de réalisation qui ont été plus spécialement envisagés ; elle en embrasse au contraire toutes les variantes telle que celle représentée à la figure 8 où le gazogène G reste en dépression, avec néanmoins un rendement du compresseur $C_2$ inférieur.

La disposition décrite peut être imaginée avec ou sans les options suivantes et toutes les combinaisons entre ces options :

- présence ou non du turbo-compresseur $C_1$, $T_1$,
- présence ou non du refroidisseur R,
- présence ou non d'introduction I de combustibles.

REVENDICATIONS.

1. Installation de gazogène du type comprenant notamment un gazogène (G), une station de traitement (K) des gaz de gazogène pour l'épuration, la filtration et le refroidissement de ceux-ci, une station de filtration (F) d'air comburant (A), un doseur-mélangeur (D) et un moteur thermique (M), caractérisé en ce que les gaz d'échappement dudit moteur thermique (M) entraînent une turbine ($T_1$) d'un premier turbo-compresseur ($C_1$, $T_1$) puis une turbine ($T_2$) d'un second turbo-compresseur ($C_2$, $T_2$) dont le compresseur ($C_2$) pulse de l'air (A) vers ledit gazogène (G), par l'intermédiaire d'une vanne formant doseur ($D_2$).

2. Installation de gazogène selon la revendication 1, caractérisé en ce que ledit doseur ($D_2$) est pourvue d'une commande asservie à la mesure différentielle des pressions dans les deux circuits d'air et de gaz de gazogène respectifs à l'amont immédiat d'un premier doseur-mélangeur ($D_1$) destiné à l'alimentation dudit moteur thermique (M).

3. Installation de gazogène selon l'une quelconque des revendications 1 et 2, caractérisé en ce que ledit compresseur ($C_2$) aspire de l'air (A) à l'aval de ladite station de filtration (F).

4. Installation de gazogène selon l'une quelconque des revendications 1 et 2, caractérisé en ce que ledit compresseur ($C_2$) aspire de l'air (A) au travers d'un second filtre ($F_2$).

5. Installation de gazogène selon l'une quelconque des revendications 1 à 4, caractérisé en ce qu'un refroidisseur (R) est interposé entre le compresseur ($C_1$) du premier turbo-compresseur ($C_1$, $T_1$) et le moteur thermique (M).

6. Installation de gazogène selon l'une quelconque des revendications 1 à 5. caractérisé en ce qu'un carburant supplémentaire (I) alimente ledit moteur thermique (M).

FIG.1

FIG.2

FIG.3

FIG.4

FIG.5

FIG.6

FIG.7

FIG.8

# RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | WO-A-8 101 295 (CATERPILLAR) <br> * Figure 2; page 10, ligne 23 - page 11, ligne 15; page 12, lignes 23-31 * | 1 | F 02 B 43/08 |
| | --- | | |
| A | FR-A-2 502 637 (RAYNE) <br> * Figures 3,5; page 8, ligne 35 - page 4, ligne 33; page 10, ligne 27 - page 11, ligne 11 * | 1,3,6 | |
| | --- | | |
| A | US-A-4 185 595 (SIEMENS) <br> * Figure 2; colonne 11, ligne 32 - colonne 12, ligne 13 * | 1,3,5 | |
| | ----- | | |

**DOMAINES TECHNIQUES RECHERCHES (Int. Cl. ³)**

F 02 B
F 02 G
B 60 K

Le présent rapport de recherche a été établi pour toutes les revendications

| Lieu de la recherche | Date d'achèvement de la recherche | Examinateur |
|---|---|---|
| LA HAYE | 29-05-1984 | VON ARX H.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82